(19) Europäisches Patentamt
European Patent Office
Office européen des brevets

(11) **EP 2 913 948 A1**

(12) **EUROPEAN PATENT APPLICATION**
published in accordance with Art. 153(4) EPC

(43) Date of publication:
**02.09.2015  Bulletin 2015/36**

(51) Int Cl.:
***H04L 1/00*** (2006.01)

(21) Application number: **12888383.2**

(22) Date of filing: **16.11.2012**

(86) International application number:
**PCT/CN2012/084730**

(87) International publication number:
**WO 2014/075286 (22.05.2014 Gazette 2014/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.**
**Longgang District**
**Shenzhen, Guangdong 518129 (CN)**

(72) Inventors:
• **DENG, Bangmei**
**Shenzhen**
**Guangdong 518129 (CN)**
• **GONG, Yuanjin**
**Shenzhen**
**Guangdong 518129 (CN)**

(74) Representative: **Maiwald Patentanwalts GmbH**
**Engineering**
**Elisenhof**
**Elisenstrasse 3**
**80335 München (DE)**

(54) **MODULATION MODE SWITCHING METHOD AND SYSTEM AND NETWORK ELEMENT**

(57)     The present invention relates to the field of network communications, and specifically discloses a method for switching a modulation mode. The method includes: detecting a mean square error (MSE) and cross-polar discrimination (XPD) of a received signal in a first polarization direction; determining a target modulation mode according to a current modulation mode of the received signal in the first polarization direction, the MSE, and the XPD; and switching a modulation mode of the received signal in the first polarization direction according to the target modulation mode. Embodiments of the present invention further disclose a system for switching a modulation mode, and a network element.

FIG. 1

**Description**

**TECHNICAL FIELD**

The present invention relates to network communications technologies, and in particular, to a method and a system for switching a modulation mode, and a network element.

**BACKGROUND**

In order to transmit more services by using limited microwave frequency band resources and improve spectrum utilization, a cross-polarization frequency reuse technology may be used. That is, two groups of independent information are transmitted on a same channel by using two polarization waves, namely, horizontal and vertical polarization waves, of an electromagnetic wave during transmission in space, thereby multiplying a data transmission rate on a single channel. A back end of a dual-polarized antenna has two interfaces, which receive two radio frequency signals. Polarization rotation is then completed within a dual-polarized feed to send the two signals as a horizontal polarization (H-Horizon) signal and a vertical polarization (V-Vertical) signal.

There is an important indicator for the dual-polarized antenna, that is, cross-polar discrimination (Cross-Polar Discrimination, XPD) of a received signal. Due to impacts of manufacture precision of the dual-polarized antenna and a microwave link transmission environment, when receiving a certain polarized signal, the dual-polarized antenna inevitably receives a signal component, in this polarization direction, of a signal in the other polarization direction. As a result, interference between two originally orthogonal signals is caused. Such interference is referred to as co-polar interference (Co-Polar Interference, XPI). A ratio of power of a signal in this polarization direction to power of the received signal component in the other polarization direction is the XPD. In a microwave system, an interference signal component, which is superposed on a useful signal, of a signal in the other polarization direction may be cancelled by using a cross polarization interference cancellation (Cross Polarization Interference Cancellation, XPIC) technology, thereby reducing interference caused by an orthogonal polarized signal.

In addition to the cross-polarization frequency reuse technology, a multi-state modulation mode implemented by using an adaptive code modulation (Adaptive Code Modulation, ACM) technology, for example, 64QAM (Quadrature Amplitude Modulation, quadrature amplitude modulation), 128QAM, and 256QAM modulation modes, may also improve the spectrum utilization. In the ACM technology, a mean square error (Mean Square Error, MSE) of a signal over a microwave link is detected in real time; and more user services are transmitted by using a high modulation mode when quality of the microwave link is good, and a service is transmitted by using a low modulation mode when the quality of the microwave link is poor, thereby ensuring normal transmission of a high-priority service.

In the prior art, when the ACM technology is used in a scenario of XPIC networking, two microwave links in horizontal and vertical polarization directions are independently detected and switched by using the ACM technology. Degradation of the XPD is not in a linear relationship with the MSE. Therefore, the following case may occur: The degradation of the XPD has caused a service bit error or even a service interruption in a current mode, but the MSE still does not exceed a threshold for triggering modulation mode switching; as a result, the ACM fails to switch to a low modulation mode, and therefore lossless transmission of a service cannot be ensured.

**SUMMARY**

Embodiments of the present invention provide a method and a system for switching a modulation mode, and a network element, which solve a problem in the prior art that lossless transmission of a service cannot be ensured when an ACM technology is used in a scenario of XPIC networking.

The embodiments of the present invention use the following technical solutions:

A first aspect of the present invention provides a method for switching a modulation mode, including:

detecting a mean square error (MSE) and cross-polar discrimination (XPD) of a received signal in a first polarization direction;
determining a target modulation mode according to a current modulation mode of the received signal in the first polarization direction, the MSE, and the XPD; and
switching a modulation mode of the received signal in the first polarization direction according to the target modulation mode.

In a first possible implementation manner, the determining a target modulation mode according to a current modulation mode of the received signal in the first polarization direction, the MSE, and the XPD specifically includes:

if the MSE is smaller than an MSE upper threshold of the current modulation mode and the XPD is greater than an XPD upper threshold of the current modulation mode, the target modulation mode is a modulation mode in which a transmission capacity is higher than that in the current modulation mode; and if the MSE is greater than an MSE lower threshold of the current modulation mode, or the XPD is smaller than an XPD lower threshold of the current modulation mode, the target modulation mode is a modulation mode in which the transmission capacity is lower than that in the current modulation mode.

With reference to the first aspect or the first possible implementation manner of the first aspect, in a second possible implementation manner, the switching a modulation mode of the received signal in the first polarization direction according to the target modulation mode specifically includes that:

sending a request message that includes the target modulation mode to a peer network element, where the request message is used by the peer network element to switch a modulation mode of a sent signal in the first polarization direction according to the target modulation mode;
receiving a response message sent by the peer network element, where the response message includes a current modulation mode of a signal sent by the peer network element in the first polarization direction; and
switching the modulation mode of the received signal in the first polarization direction to the current modulation mode of the signal sent by the peer network element in the first polarization direction.

With reference to the first aspect, or the first possible implementation manner of the first aspect or the second possible implementation manner of the first aspect, in a third possible implementation manner, the first polarization direction is a horizontal polarization direction or a vertical polarization direction.
A second aspect of the present invention provides a network element, including:

a detecting unit, configured to detect a mean square error (MSE) and cross-polar discrimination (XPD) of a received signal in a first polarization direction;
a determining unit, configured to determine a target modulation mode according to a current modulation mode of the received signal in the first polarization direction, the MSE, and the XPD; and
a switching unit, configured to switch a modulation mode of the received signal in the first polarization direction according to the target modulation mode.

In a first possible implementation manner, the determining unit specifically includes:

a determining subunit, configured to: if the MSE is smaller than an MSE upper threshold of the current modulation mode and the XPD is greater than an XPD upper threshold of the current modulation mode, determine that the target modulation mode is a modulation mode in which a transmission capacity is higher than that in the current modulation mode; and if the MSE is greater than an MSE lower threshold of the current modulation mode, or the XPD is smaller than an XPD lower threshold of the current modulation mode, determine that the target modulation mode is a modulation mode in which the transmission capacity is lower than that in the current modulation mode.

With reference to the second aspect or the first possible implementation manner of the second aspect, in a second possible implementation manner, the switching unit specifically includes:

a switching subunit, configured to: send a request message that includes the target modulation mode to a peer network element, where the request message is used by the peer network element to switch a modulation mode of a sent signal in the first polarization direction according to the target modulation mode; receive a response message sent by the peer network element, where the response message includes a current modulation mode of a signal sent by the peer network element in the first polarization direction; and switch the modulation mode of the received signal in the first polarization direction to the current modulation mode of the signal sent by the peer network element in the first polarization direction.

With reference to the second aspect, or the first possible implementation manner of the second aspect or the second possible implementation manner of the second aspect, in a third possible implementation manner, the first polarization direction is a horizontal polarization direction or a vertical polarization direction.
A third aspect of the present invention provides a system for switching a modulation mode, where the system includes at least a first network element and the second network element in the second possible implementation manner of the second aspect, and the first network element is a peer network element of the second network element.
The first network element is configured to: receive a request message that includes the target modulation mode and is sent by the second network element; switch a modulation mode of a sent signal in a first polarization direction according to the target modulation mode; send a response message to the second network element, where the response message includes a current modulation mode of a signal sent by the first network element in the first polarization direction.

According to the method and system for switching a modulation mode, and the network element provided in the embodiments of the present invention, XPD real-time detection at a receiving end is added to the ACM protocol in a scenario of XPIC networking, and XPD is also used as a condition for determining whether modulation mode switching is performed for the ACM, so that ACM lossless switching is performed in a timely manner in a case in which a signal to noise ratio and the XPD change due to a change of a microwave link, thereby ensuring lossless transmission of a service.

## BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a flowchart of a method for switching a modulation mode according to an embodiment of the present invention;
FIG. 2 is a schematic diagram of a networking topology according to an embodiment of the present invention;
FIG. 3 is a table of thresholds in a modulation mode according to an embodiment of the present invention;
FIG. 4 is a structural block diagram of a network element according to an embodiment of the present invention;
FIG. 5 is a structural block diagram of another network element according to an embodiment of the present invention; and
FIG. 6 is a schematic diagram of a system for switching a modulation mode according to an embodiment of the present invention.

## DESCRIPTION OF EMBODIMENTS

Embodiments of the present invention provide a method and a system for switching a modulation mode, and a network element. To make the technical solutions in the present invention more comprehensible, the following describes the embodiments of the present invention in detail with reference to the accompanying drawings.

It should be clear that the described embodiments are merely a part rather than all of the embodiments of the present invention. All other embodiments obtained by a person of ordinary skill in the art based on the embodiments of the present invention without creative efforts shall fall within the protection scope of the present invention.

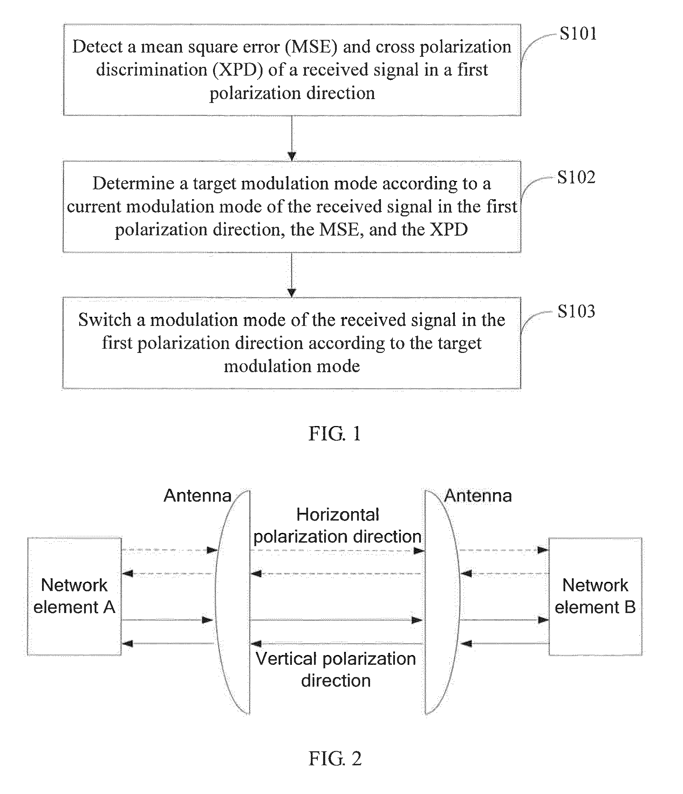

According to an embodiment of the present invention, a flowchart of a method for switching a modulation mode is shown in FIG. 1. The method includes the following steps:

Step S101: Detect a mean square error (MSE) and cross-polar discrimination (XPD) of a received signal in a first polarization direction.

Step S102: Determine a target modulation mode according to a current modulation mode of the received signal in the first polarization direction, the MSE, and the XPD.

Step S103: Switch a modulation mode of the received signal in the first polarization direction according to the target modulation mode.

Further, step S102 may specifically include:

if the MSE is smaller than an MSE upper threshold of the current modulation mode and the XPD is greater than an XPD upper threshold of the current modulation mode, the target modulation mode is a modulation mode in which a transmission capacity is higher than that in the current modulation mode; and if the MSE is greater than an MSE lower threshold of the current modulation mode, or the XPD is smaller than an XPD lower threshold of the current modulation mode, the target modulation mode is a modulation mode in which the transmission capacity is lower than that in the current modulation mode.

Further, step S103 may specifically include:

sending a request message that includes the target modulation mode to a peer network element, where the request message is used by the peer network element to switch a modulation mode of a sent signal in the first polarization direction according to the target modulation mode;
receiving a response message sent by the peer network element, where the response message includes a current modulation mode of a signal sent by the peer network element in the first polarization direction; and
switching the modulation mode of the received signal in the first polarization direction to the current modulation mode of the signal sent by the peer network element in the first polarization direction.

Further, the first polarization direction may be a horizontal polarization direction or a vertical polarization direction.

A method and a system for switching a modulation mode, and a network element provided in the embodiments of the present invention are described in detail as follows with reference to accompanying drawings.

It should be clear that the described embodiments are merely a part rather than all of the embodiments of the present invention. All other embodiments obtained by a person of ordinary skill in the art based on the embodiments of the present invention without creative efforts shall fall within the protection scope of the present invention.

An embodiment of the present invention provides a method for switching a modulation mode. FIG. 2 shows XPIC networking, including a network element A and a network element B. The network element A and the network element B function as a peer network element to each other. Cross-polarization frequency reuse is used between the network elements, and signals are received and sent over two bidirectional microwave links in the horizontal polarization direction and the vertical polarization direction. Both the network element A and the network element B enable the XPIC and ACM functions. By using a microwave link from the network element B to the network element A in the horizontal polarization direction as an example, the method specifically includes the following steps:

Step S210: The network element A detects an MSE and XPD of a received signal in the horizontal polarization direction.

The MSE is a reciprocal of the signal to noise ratio (Signal to Noise Ratio, SNR).

$MSE = E(|y-s|^2)/|y|^2)$, where y denotes a standard constellation point vector, and s denotes an actual received signal point vector. The network element may calculate hard decision errors between a plurality of received signal constellation points that are consecutively detected and the standard constellation point, and then calculate an expectation of a plurality of hard decision errors to acquire the MSE. In a case in which the signal to noise ratio on the microwave link is degraded due to, for example, rain attenuation, the MSE detected by the network element is degraded accordingly.

The MSE actually detected by the network element may be a weighted average value of a plurality of hard decision errors between received signal constellation points and the standard constellation point within a period of time. The calculation formula is $MSE_n = (1-\alpha) \times MSE_{n-1} + \alpha \times |err|^2$, where $|err|$ denotes a hard decision error between a currently received signal constellation point and the standard constellation point, $\alpha$ denotes an iteration weight, $MSE_n$ denotes a weighted average value of n hard decision errors, and $MSE_{n-1}$ denotes a weighted average value of n-1 hard decision errors.

The XPD is a 10log (primary signal power in this polarization direction/interference signal power in the other polarization direction), that is,

$$XPD_H = 10\log (|E_{HH}|^2/|E_{VH}|^2), XPD_V = 10\log (|E_{VV}|^2/|E_{HV}|^2),$$

where $XPD_H$ and $XPD_V$ respectively denote XPD in the horizontal polarization direction and XPD in the vertical polarization direction, $E_{HH}$ and $E_{VV}$ respectively denote primary signal power in the horizontal polarization direction and primary signal power in the vertical polarization direction, $E_{VH}$ denotes an interference signal in the vertical polarization direction that is received in the horizontal polarization direction, and $E_{HV}$ denotes an interference signal in the horizontal polarization direction that is received in the vertical polarization direction.

In actual detection, the primary signal power detected by the network element in this polarization direction and the interference signal power detected by the network element in the other polarization direction may be acquired by means of calculation according to a tap coefficient updated by a feed forward filter (Feed Forward Filter, FFF). A smaller XPD value indicates that the interference signal power is closer to the primary signal power.

Step S220: Determine a target modulation mode according to a current modulation mode of the received signal in the horizontal polarization direction, and the MSE and XPD of the received signal.

In this embodiment, a plurality of modulation modes to be used by the network element, modulation mode thresholds corresponding to the plurality of modulation modes, and a switching sequence of the plurality of modulation modes that support different transmission capacities may be preconfigured. The modulation mode thresholds may include an MSE upper threshold, an XPD upper threshold, an MSE lower threshold, and an XPD lower threshold corresponding to a modulation mode. A target modulation mode is selected by using the MSE and XPD of the received signal.

Specifically, if the MSE is smaller than an MSE upper threshold of the current modulation mode and the XPD is greater than an XPD upper threshold of the current modulation mode, the target modulation mode is a modulation mode in which a transmission capacity is higher than that in the current modulation mode; and if the MSE is greater than an MSE lower threshold of the current modulation mode, or the XPD is smaller than an XPD lower threshold of the current modulation mode, the target modulation mode is a modulation mode in which the transmission capacity is lower than that in the current modulation mode.

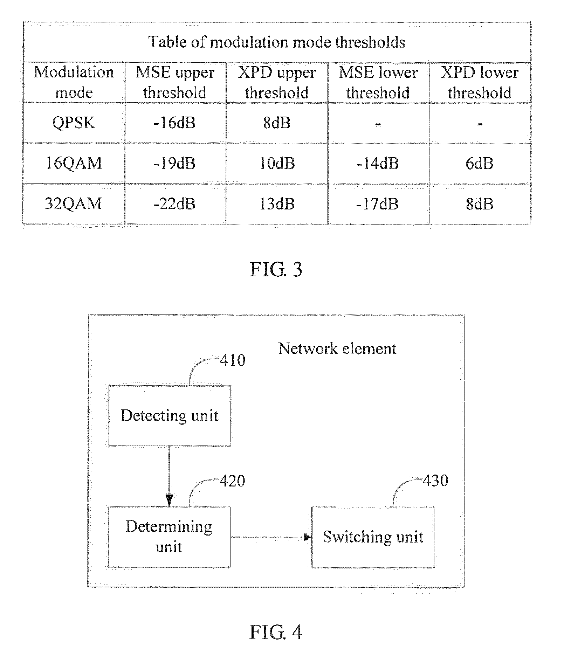

FIG. 3 shows a table of modulation mode thresholds. By using 16QAM as an example of the current modulation mode, the MSE upper threshold is -19 dB, the XPD upper threshold is 10 dB, the MSE lower threshold is -14 dB, and the XPD lower threshold is 6 dB.

When the MSE of the received signal < -19 dB and the XPD of the received signal > 10 dB, the target modulation mode is 32QAM in which the transmission capacity is greater than that in 16QAM.

When the MSE of the received signal > -14 dB or the XPD of the received signal < 6 dB, the target modulation mode is QPSK in which the transmission capacity is smaller than that in 16QAM.

The MSE lower threshold and the XPD lower threshold corresponding to the current modulation mode may be acquired by means of actual measurement according to a bit error performance of a microwave device in the current modulation mode. The MSE lower threshold and the XPD lower threshold corresponding to a modulation mode are respectively: the maximum MSE and the minimum XPD having no bit error within a continuous monitoring period of time when a microwave link works in the modulation mode.

For example, when a microwave link works in 16QAM, the maximum MSE and the minimum XPD of an XPIC link having no bit error within 12 consecutive hours are: $MSE_{max}$ = -14 dB and $XPD_{min}$ = 6 dB. Therefore, the MSE lower threshold and the XPD lower threshold corresponding to the 16QAM modulation mode are respectively -14 dB and 6 dB.

The MSE upper threshold and the XPD upper threshold corresponding to the current modulation mode may also be acquired by means of actual measurement according to a bit error performance of a microwave device in the current modulation mode. The MSE upper threshold and the XPD upper threshold corresponding to a modulation mode are respectively: the minimum MSE and the maximum XPD that do not cause the modulation mode to switch to a modulation mode having a lower transmission capacity when a microwave link works in the modulation mode and link quality remains unchanged.

For example, when a microwave link works in 16QAM, in a case in which the link quality remains unchanged, the minimum MSE and the maximum XPD that do not cause the modulation mode to switch to QPSK having a lower transmission capacity are: $MSE_{min}$ = -19 dB and $XPD_{max}$ = 10 dB. Therefore, the MSE upper threshold and the XPD upper threshold corresponding to the 16QAM modulation mode are respectively -19 dB and 10 dB.

Step S230: The network element A switches a modulation mode of the received signal in the horizontal polarization direction according to the target modulation mode.

In this embodiment, step S230 may specifically include the following steps:

Step S231: The network element A sends a request message that includes the target modulation mode to the network element B.

Step S232: The network element B receives the request message, switches a modulation mode of a sent signal in the horizontal polarization direction according to the target modulation mode, and sends a response message to the network element A, where the response message includes a current modulation mode of a signal sent by the network element B in the horizontal polarization direction.

In this embodiment, the network element B switches the modulation mode of the sent signal in the horizontal polarization direction according to the target modulation mode; if the network element B successfully switches the modulation mode of the sent signal in the horizontal polarization direction to the target modulation mode, the current modulation mode of the network element B in the horizontal polarization direction is the target modulation mode; otherwise, if the network element B fails to switch the modulation mode of the sent signal in the horizontal polarization direction to the target modulation mode, the current modulation mode of the network element B in the horizontal polarization direction is the modulation mode before the request message is received.

Step S233: The network element A receives the response message, and switches the modulation mode of the received signal in the horizontal polarization direction to the current modulation mode of the signal sent by the network element B in the horizontal polarization direction.

The foregoing embodiment describes a switching process of the modulation mode from the network element B to the network element A in the horizontal polarization direction. Switching processes of the modulation modes of microwave links from the network element A to the network element B in the horizontal polarization direction, from the network element A to the network element B in the vertical polarization direction, and from the network element B to the network element A in the vertical polarization direction are similar, which are not described herein any further. Automatic switching of modulation modes may be separately performed on the microwave links in a total of four directions in the two polarization directions, and the microwave links may use different modulation modes.

In the method for switching a modulation mode provided in this embodiment of the present invention, XPD real-time detection at a receiving end is added to the ACM protocol in a scenario of XPIC networking, and XPD is also used as a condition for determining whether modulation mode switching is performed for the ACM, so that ACM lossless switching is performed in a timely manner in a case in which a signal to noise ratio and the XPD change due to a change of a microwave link, thereby ensuring lossless transmission of a service.

An embodiment of the present invention provides a network element. As shown in FIG. 4, the network element includes:

a detecting unit 410, configured to detect a mean square error (MSE) and cross-polar discrimination (XPD) of a received signal in a first polarization direction;

a determining unit 420, configured to determine a target modulation mode according to a current modulation mode of the received signal in the first polarization direction, and the MSE and XPD of the received signal; and

a switching unit 430, configured to switch a modulation mode of the received signal in the first polarization direction according to the target modulation mode.

Further, the determining unit 420 may specifically include:

a determining subunit 421, configured to: if the MSE is smaller than an MSE upper threshold of the current modulation mode and the XPD is greater than an XPD upper threshold of the current modulation mode, determine that the target modulation mode is a modulation mode in which a transmission capacity is higher than that in the current modulation mode; and if the MSE is greater than an MSE lower threshold of the current modulation mode, or the XPD is smaller than an XPD lower threshold of the current modulation mode, determine that the target modulation mode is a modulation mode in which the transmission capacity is lower than that in the current modulation mode.

Further, the switching unit 430 may specifically include:

a switching subunit 431, configured to: send a request message that includes the target modulation mode to a peer network element, where the request message is used by the peer network element to switch a modulation mode of a sent signal in the first polarization direction according to the target modulation mode; receive a response message sent by the peer network element, where the response message includes a current modulation mode of a signal sent by the peer network element in the first polarization direction; and switch the modulation mode of the received signal in the first polarization direction to the current modulation mode of the signal sent by the peer network element in the first polarization direction.

In this embodiment, the first polarization direction may be a horizontal polarization direction or a vertical polarization direction. In the horizontal and vertical polarization directions, a same unit may be used to process a similar function in the two polarization directions, or different units may be used to separately process a similar function in the two polarization directions. For example, the MSE and the XPD in the horizontal and vertical polarization directions may be detected by the detecting unit 410 in the embodiment, or the MSE and the XPD in the horizontal and vertical polarization directions may be separately detected by two detecting units. The determining unit 420 and the switching unit 430 are analogous thereto, which are not limited by this embodiment.

Content such as information interaction and an execution process between the modules in the network element in the foregoing embodiment is based on the same inventive concept as the method embodiment of the present invention. For details, reference may be made to description in the method embodiment of the present invention, which is not described herein any further.

In the network element provided in this embodiment of the present invention, XPD real-time detection at a receiving end is added to the ACM protocol in a scenario of XPIC networking, and XPD is also used as a condition for determining whether modulation mode switching is performed for the ACM, so that ACM lossless switching is performed in a timely manner in a case in which a signal to noise ratio and the XPD change due to a change of a microwave link, thereby ensuring lossless transmission of a service.

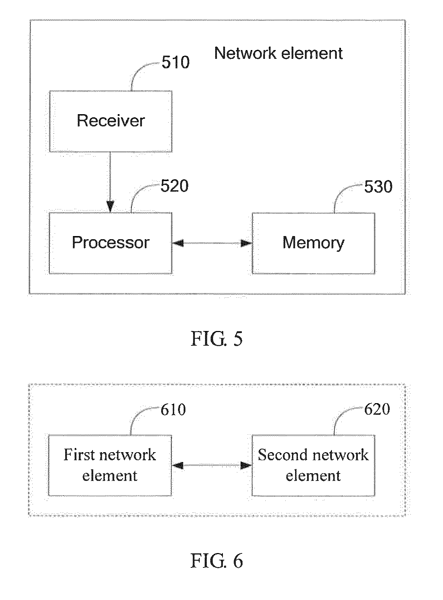

An embodiment of the present invention provides a network element. As shown in FIG. 5, the network element includes:

a receiver 510, configured to receive a signal in a first polarization direction;

a processor 520, connected to the receiver 510 and a memory 530, and configured to: detect a mean square error (MSE) and cross-polar discrimination (XPD) of a received signal in a first polarization direction; determine a target modulation mode according to a current modulation mode of the received signal in the first polarization direction, and the MSE and XPD of the received signal; and switch a modulation mode of the received signal in the first polarization direction according to the target modulation mode; and

the memory 530, configured to store an execution program of the processor 520.

An embodiment of the present invention provides a system for switching a modulation mode. As shown in FIG. 6, the system includes at least a first network element 610 and a second network element 620, where the first network element 610 is a peer network element of the second network element 620.

The first network element 610 is configured to: receive a request message that includes a target modulation mode sent by the second network element 620; switch a modulation mode of a sent signal in the first polarization direction according to the target modulation mode; and send a response message to the second network element 620, where the response message includes a current modulation mode of a signal sent by the first network element 610 in the first polarization direction.

The second network element 620 includes: a detecting unit, a determining unit, and a switching unit. For details, reference may be made to the detecting unit 410, the determining unit 420, and the switching unit 430 in the foregoing network element embodiment. The switching unit specifically includes a switching subunit 431, which is not described herein any further.

In this embodiment, the first polarization direction may be a horizontal polarization direction or a vertical polarization direction.

In the technical solutions provided in the embodiments of the present invention, XPD real-time detection at a receiving end is added to the ACM protocol in a scenario of XPIC networking, and XPD is also used as a condition for determining whether modulation mode switching is performed for the ACM, so that ACM lossless switching is performed in a timely manner in a case in which a signal to noise ratio and the XPD change due to a change of a microwave link, thereby ensuring lossless transmission of a service.

A person of ordinary skill in the art may understand that all or a part of the steps of the methods in the embodiments may be implemented by a computer program instructing relevant hardware. The program may be stored in a computer readable storage medium. When the program runs, the processes of the methods in the embodiments are performed. The storage medium may include: a magnetic disk, an optical disc, a read-only memory (Read-Only Memory, ROM), or a random access memory (Random Access Memory, RAM).

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A method for switching a modulation mode, comprising:

   detecting a mean square error (MSE) and cross-polar discrimination (XPD) of a received signal in a first polarization direction;
   determining a target modulation mode according to a current modulation mode of the received signal in the first polarization direction, the MSE, and the XPD; and
   switching a modulation mode of the received signal in the first polarization direction according to the target modulation mode.

2. The method according to claim 1, wherein the determining a target modulation mode according to a current modulation mode of the received signal in the first polarization direction, the MSE, and the XPD specifically comprises that:

   if the MSE is smaller than an MSE upper threshold of the current modulation mode and the XPD is greater than an XPD upper threshold of the current modulation mode, the target modulation mode is a modulation mode in which a transmission capacity is higher than that in the current modulation mode; and if the MSE is greater than an MSE lower threshold of the current modulation mode, or the XPD is smaller than an XPD lower threshold of the current modulation mode, the target modulation mode is a modulation mode in which the transmission capacity is lower than that in the current modulation mode.

3. The method according to claim 1 or 2, wherein the switching a modulation mode of the received signal in the first polarization direction according to the target modulation mode specifically comprises:

   sending a request message that comprises the target modulation mode to a peer network element, wherein the request message is used by the peer network element to switch a modulation mode of a sent signal in the first polarization direction according to the target modulation mode;
   receiving a response message sent by the peer network element, wherein the response message comprises a current modulation mode of a signal sent by the peer network element in the first polarization direction; and
   switching the modulation mode of the received signal in the first polarization direction to the current modulation mode of the signal sent by the peer network element in the first polarization direction.

4. The method according to claim 1, 2, or 3, wherein the first polarization direction is a horizontal polarization direction or a vertical polarization direction.

5. A network element, comprising:

   a detecting unit, configured to detect a mean square error (MSE) and cross-polar discrimination (XPD) of a received signal in a first polarization direction;
   a determining unit, configured to determine a target modulation mode according to a current modulation mode of the received signal in the first polarization direction, the MSE, and the XPD; and
   a switching unit, configured to switch a modulation mode of the received signal in the first polarization direction according to the target modulation mode.

6. The network element according to claim 5, wherein the determining unit specifically comprises:

   a determining subunit, configured to: if the MSE is smaller than an MSE upper threshold of the current modulation mode and the XPD is greater than an XPD upper threshold of the current modulation mode, determine that the target modulation mode is a modulation mode in which a transmission capacity is higher than that in the current modulation mode; and if the MSE is greater than an MSE lower threshold of the current modulation mode, or the XPD is smaller than an XPD lower threshold of the current modulation mode, determine that the target modulation mode is a modulation mode in which the transmission capacity is lower than that in the current modulation mode.

7. The network element according to claim 5 or 6, wherein the switching unit specifically comprises:

   a switching subunit, configured to: send a request message that comprises the target modulation mode to a peer network element, wherein the request message is used by the peer network element to switch a modulation mode of a sent signal in the first polarization direction according to the target modulation mode; receive a response message sent by the peer network element, wherein the response message comprises a current modulation mode of a signal sent by the peer network element in the first polarization direction; and switch the modulation mode of the received signal in the first polarization direction to the current modulation mode of the signal sent by the peer network element in the first polarization direction.

8. The network element according to claim 5, 6, or 7, wherein the first polarization direction is a horizontal polarization direction or a vertical polarization direction.

9. A system for switching a modulation mode, wherein the system comprises at least a first network element and the second network element according to claim 7, and the first network element is a peer network element of the second network element; wherein:

   the first network element is configured to: receive a request message that comprises a target modulation mode sent by the second network element; switch a modulation mode of a sent signal in a first polarization direction according to the target modulation mode; and send a response message to the second network element, wherein the response message comprises a current modulation mode of a signal sent by the first network element in the first polarization direction.

Detect a mean square error (MSE) and cross polarization discrimination (XPD) of a received signal in a first polarization direction — S101

Determine a target modulation mode according to a current modulation mode of the received signal in the first polarization direction, the MSE, and the XPD — S102

Switch a modulation mode of the received signal in the first polarization direction according to the target modulation mode — S103

FIG. 1

Antenna   Antenna

Horizontal polarization direction

Network element A

Vertical polarization direction

Network element B

FIG. 2

| Table of modulation mode thresholds | | | | |
|---|---|---|---|---|
| Modulation mode | MSE upper threshold | XPD upper threshold | MSE lower threshold | XPD lower threshold |
| QPSK | -16dB | 8dB | - | - |
| 16QAM | -19dB | 10dB | -14dB | 6dB |
| 32QAM | -22dB | 13dB | -17dB | 8dB |

FIG. 3

Network element

410

Detecting unit

420

Determining unit

430

Switching unit

FIG. 4

FIG. 5

FIG. 6

# EP 2 913 948 A1

## INTERNATIONAL SEARCH REPORT

International application No.

**PCT/CN2012/084730**

### A. CLASSIFICATION OF SUBJECT MATTER

H04L 1/00 (2006.01) i

According to International Patent Classification (IPC) or to both national classification and IPC

### B. FIELDS SEARCHED

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNTXT, CPRSABS, CNKI: adaptive coded modulation   ACM   mean square error   MSE   cross polarization discrimination   XPD   modulation   mode   switch   polarization

VEN, NPL, SIPOABS, GOOGLE, IEEE: ACM MSE XPD modulat+ mode switch polar

### C. DOCUMENTS CONSIDERED TO BE RELEVANT

| Category* | Citation of document, with indication, where appropriate, of the relevant passages | Relevant to claim No. |
|---|---|---|
| A | CN 101478366 A (HUAWEI TECHNOLOGIES CO., LTD.), 08 July 2009 (08.07.2009), the whole document | 1-9 |
| A | CN 101826938 A (HUAWEI TECHNOLOGIES CO., LTD.), 08 September 2010 (08.09.2010), the whole document | 1-9 |
| A | CN 102098124 A (SHANGHAI HUAHONG INTEGRATED CIRCUIT CO., LTD.), 15 June 2011 (15.06.2011), the whole document | 1-9 |

☐ Further documents are listed in the continuation of Box C.       ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 August 2013 (10.08.2013) | **22 August 2013 (22.08.2013)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **CHENG, Dong** Telephone No.: (86-10) **62411276** |

Form PCT/ISA/210 (second sheet) (July 2009)

## INTERNATIONAL SEARCH REPORT
### Information on patent family members

International application No.

**PCT/CN2012/084730**

| Patent Documents referred in the Report | Publication Date | Patent Family | Publication Date |
|---|---|---|---|
| CN 101478366 A | 08.07.2009 | CN 101478366 B | 14.09.2011 |
| CN 101826938 A | 08.09.2010 | WO 2011120399 A1 | 06.10.2011 |
| | | US 2013022093 A1 | 24.01.2013 |
| | | CN 101826938 B | 13.03.2013 |
| CN 102098124 A | 15.06.2011 | None | |

Form PCT/ISA/210 (patent family annex) (July 2009)